# EUROPÄISCHE PATENTSCHRIFT

(11) **EP 2 688 169 B1**
(45) Veröffentlichungstag und Bekanntmachung des Hinweises auf die Patenterteilung: **01.04.2015**
(21) Anmeldenummer: 13175984.7
(22) Anmeldetag: 10.07.2013
(51) Int. Cl.: H02G 3/06, H02G 15/04

(54) **Kabeldurchführung**
Cable feedthrough
Passe-câble

(30) Priorität: 20.07.2012 DE 102012106592
(43) Veröffentlichungstag der Anmeldung: 22.01.2014
(73) Patentinhaber: Lapp Engineering & Co., 6330 Cham (CH)
(72) Erfinder: Drotleff, Rolf, 75392 Deckenpfronn (DE); Müller, Daniel, 71686 Remseck (DE)
(74) Vertreter: Hoeger, Stellrecht & Partner Patentanwälte

(56) Entgegenhaltungen:
- EP-A2- 1 783 876
- DE-A1-102008 019 165
- US-A1- 2008 073 102

## Beschreibung

Die Erfindung betrifft eine Kabeldurchführung umfassend eine Kabelfixiereinheit mit einem Fixierungsgehäuse, das mit einer Kabelfixierung und einem Halteabschnitt versehen ist, sowie ein einen Kabelschirm eines durch die Kabeldurchführung hindurchgeführten Kabels kontaktierendes Schirmkontaktelement.

Derartige Kabeldurchführungen sind aus dem Stand der Technik bekannt.

Beispiele für derartige Kabeldurchführungen sind beispielsweise Kabelverschraubungen, wie sie in der EP 1 022 836 beschrieben ist.

Die US2008/073102 offenbart eine Kabeldurchführung nach dem Oberbegriff des Anspruchs 1.

Bei derartigen Kabeldurchführungen besteht das Problem, einerseits die Kabelfixiereinheit möglichst einfach und kostengünstig zu gestalten und andererseits eine möglichst gute elektrisch leitende Verbindung zwischen dem Kabelschirm und einem die Kabeldurchführung tragenden Wandabschnitt herzustellen.

Diese Aufgabe wird bei einer Kabeldurchführung der eingangs beschriebenen Art erfindungsgemäß durch die Merkmale des Anspruchs 1 gelöst.

Der Vorteil der erfindungsgemäßen Lösung ist darin zu sehen, dass damit die Möglichkeit besteht, die Kabelfixiereinheit selbst mit der Montageeinheit zu verbinden, wobei über die Montageeinheit dann die elektrische Verbindung zwischen dem Wandabschnitt und dem Schirmkontaktelement hergestellt wird. Somit besteht auch beispielsweise die Möglichkeit, die Kabelfixierung aus geeigneten kostengünstigen Materialien herzustellen, ohne dabei Rücksicht auf die elektrische Leitfähigkeit dieser Materialien legen zu müssen, während lediglich die Montageeinheit so herzustellen ist, dass sie die elektrisch leitende Verbindung zwischen dem Wandabschnitt und dem Schirmkontaktelement herstellt.

Unter einer elektrisch leitenden Verbindung im Sinne dieser Patentanmeldung ist dabei eine Verbindung mit Materialien zu verstehen, deren elektrische Leitfähgkeit mindestens die Werte der elektrischen Leitfähigkeit von Aluminium, Stahl, Messing oder Kupfer aufweist, so dass die bei der erfindungsgemäßen Kabeldurchführung geforderte elektrische leitfähige Verbindung auch der von üblichen Materialien entspricht, aus welchen abgeschirmte Gehäuse für elektrische Anlagen herstellbar sind.

Hinsichtlich der Verbindung zwischen der Kabelfixiereinheit und der Montageeinheit wurden bislang keine näheren Angaben gemacht.

Eine derartige Verbindung ist insbesondere relativ einfach zu realisieren und erlaubt es im Übrigen, die Kabelfixiereinheit entsprechend einer Kabelfixiereinheit auszubilden, die auch selbst als Kabeldurchführung, allerdings nicht mit einer Schirmkontaktierung, einsetzbar ist.

Zu der Verbindung zwischen dem Halteabschnitt und der Aufnahme wurden bislang keine näheren Angaben hinsichtlich der Gestaltung der formschlüssigen Verbindung gemacht, wobei grundsätzlich alle Gestaltungen formschlüssiger Verbindungen möglich sind.

Eine vorteilhafte Lösung sieht vor, dass der Halteabschnitt in der Aufnahme durch ineinandergreifende Gewinde formschlüssig gehalten ist.

Eine andere vorteilhafte Lösung sieht vor, dass der Halteabschnitt in der Aufnahme durch einander hintergreifende Elemente formschlüssig gehalten ist.

Diese Elemente können beispielsweise Rastelemente sein oder einen Flansch hintergreifende Nasen.

Hinsichtlich der Anordnung des Schirmkontaktelements wurden im Zusammenhang mit der bisherigen Erläuterung der erfindungsgemäßen Lösung keine näheren Angaben gemacht.

Dabei könnte das Schirmkontaktelement als separates Teil bei dem Einbau der Kabeldurchführung in dem Wandabschnitt verbaut werden.

Eine vorteilhafte Lösung vor, dass das Schirmkontaktelement an der Montageeinheit gehalten ist.

Vorzugsweise ist dabei das Schirmkontaktelement an der Montageeinheit an einem außerhalb der Aufnahme für den Halteabschnitt liegenden Bereich angeordnet.

Dabei könnte das Schirmkontaktelement grundsätzlich stirnseitig oder umfangsseitig der Montageeinheit gehalten sein.

Eine besonders günstige Lösung sieht vor, dass das Schirmkontaktelement in eine Schirmkontaktelementaufnahme der Montageeinheit eingesetzt ist, so dass die Montageeinheit einfach handhabbar und montierbar ist, da das Schirmkontaktelement im Innern der Montageeinheit angeordnet ist.

Eine zweckmäßige Lösung sieht dabei vor, dass die Schirmkontaktelementaufnahme in einem der Aufnahme für das Halteelement gegenüberliegenden Bereich der Montageeinheit angeordnet ist.

Ferner wurden im Zusammenhang mit der bisher beschriebenen Lösung keine näheren Angaben darüber gemacht, wie die Montageeinheit an dem Wandabschnitt gehalten sein soll.

So sieht eine vorteilhafte Lösung vor, dass die Montageeinheit an einer Innenwandfläche einer Öffnung des Wandabschnitts festlegbar ist.

Eine derartige Festlegung wäre beispielsweise durch einen Presssitz realisierbar.

Eine andere vorteilhafte Lösung sieht vor, dass die Montageeinheit formschlüssig an dem Wandabschnitt festlegbar ist.

Insbesondere ist zur sicheren Montage der Montageeinheit vorgesehen, dass die Montageeinheit eine Öffnung in dem Wandabschnitt durchgreift.

Ferner lässt sich insbesondere die Montageeinheit an dem Wandabschnitt dann vorteilhaft fixieren, wenn die Montageeinheit in die Innenwand der Öffnung formschlüssig eingreifende Elemente aufweist.

Eine vorteilhafte Lösung sieht dabei vor, dass die in die Innenwand formschlüssig eingreifenden Elemente Gewindeelemente sind.

Dabei könnten die Gewindeelemente Gewindeelemente üblicher Maschinengewinde oder Normgewinde sein.

Es besteht aber auch die Möglichkeit, die Gewindeelemente als übliche Gewindeelemente zum Einschrauben in Bleche auszubilden.

Eine andere vorteilhafte Lösung sieht vor, dass die Gewindeelemente selbstschneidende Gewindeelemente sind, so dass mit diesen Gewindeelementen entweder ein vorgeschnittenes Gewinde im Wandabschnitt nachgeschnitten oder das Gewinde im Wandabschnitt selbstständig geschnitten werden kann.

Hinsichtlich der elektrisch leitenden Verbindung zwischen dem Wandabschnitt und der Montageeinheit wurden bislang keine näheren Angaben gemacht.

So sieht eine besonders günstige Lösung vor, dass die Montageeinheit im Bereich der Öffnung mit dem Wandabschnitt elektrisch leitend verbindbar ist, da dadurch die Möglichkeit besteht, bei Montage der Montageeinheit an dem Wandabschnitt gleichzeitig die elektrisch leitende Verbindung mit diesem herzustellen.

Beispielsweise lässt sich dies dadurch realisieren, dass die Montageeinheit mit die elektrisch leitende Verbindung zum Wandabschnitt herstellenden und in diesen eingreifenden Elementen versehen ist.

Diese Elemente könnten unabhängig von der Befestigung der Montageeinheit an dem Wandabschnitt wirkende Elemente sein.

Es besteht aber auch die Möglichkeit, als derartige Elemente die Elemente vorzusehen, die zur Fixierung der Montageeinheit an dem Wandabschnitt dienen.

Eine besonders günstige Möglichkeit sieht dabei vor, dass die Montageeinheit mit die elektrisch leitende Verbindung zum Wandabschnitt herstellenden, in die Innenwand der Öffnung eingreifenden Elementen versehen ist.

Derartige, in die Innenwand der Öffnung eingreifende Elemente sind im einfachsten Fall Elemente von Gewinden, die gleichzeitig zur Fixierung der Montageeinheit an der Öffnung eingesetzt werden.

Eine besonders günstige Lösung sieht vor, dass die elektrisch leitende Verbindung zwischen den in die Innenwand eingreifenden Elementen und der Innenwand durch beim Eingreifen verspannende Elemente verbessert ist.

Eine derartige verstärkte Reibung lässt sich beispielsweise dadurch realisieren, dass im Fall von Gewindeelementen diese nicht als übliche Normgewinde ausgebildet sind, sondern beispielsweise als konisch verlaufende Gewinde, die bei zunehmendem Einschrauben in die Öffnung des Wandabschnitts eine zunehmende Verspannung zwischen der Montageeinheit und dem Wandabschnitt durch verstärkte Reibung aufbauen.

Eine weitere vorteilhafte Lösung sieht vor, dass das Montageelement zusätzliche, sich in den Wandabschnitt eingrabende Elemente aufweist.

Derartige zusätzliche, sich in den Wandabschnitt eingrabende Elemente könnten beispielsweise Vorsprünge im Bereich eines die Öffnung übergreifenden Bundes sein.

Es ist aber auch denkbar, diese Vorsprünge in die in die Innenwand eingreifenden Elemente zu integrieren.

Darüber hinaus sieht eine vorteilhafte Variante der erfindungsgemäßen Lösung vor, dass die Montageeinheit von der Seite des Wandabschnitts montierbar ist, auf welcher die Kabelfixiereinheit angeordnet ist, so dass die Möglichkeit besteht, die Montageeinheit mit der Kabelfixiereinheit zu verbinden und dann beide gemeinsam von einer Seite in dem Wandabschnitt zu fixieren, so dass eine einseitige Zugänglichkeit des Wandabschnitts ausreichend ist.

Hinsichtlich der Ausbildung der Kabelfixiereinheit wurden im Zusammenhang mit der bisherigen Erläuterung der einzelnen erfindungsgemäßen Lösungen keine näheren Angaben gemacht.

Insbesondere wurde nicht näher auf die Ausbildung der Kabelfixierung der Kabelfixereinheit eingegangen.

Vorzugsweise ist dabei vorgesehen, dass die Kabelfixierung an dem Fixierungsgehäuse außerhalb des Halteabschnitts angeordnet ist.

Besonders günstig ist es, wenn die Kabelfixierung an dem Fixierungsgehäuse auf einer dem Halteabschnitt gegenüberliegenden Seite angeordnet ist.

Dabei kann die Kabelfixierung in unterschiedlichster Art und Weise ausgebildet sein.

Im einfachsten Fall kann die Kabelfixierung eine Klemmung für das Kabel umfassen.

Eine besonders zweckmäßige Lösung sieht dabei vor, dass die Kabelfixierung eine Hutmutter und einen Lamellenkorb umfasst, wobei durch die Hutmutter der Lamellenkorb in Richtung eines durch die Kabeldurchführung hindurchlaufenden Kabels beaufschlagbar ist und durch den Lamellenkorb das Kabel klemmbar ist.

Der Lamellenkorb könnte dabei unmittelbar auf das Kabel wirken. Eine konstruktiv besonders vorteilhafte Lösung sieht vor, dass der Lamellenkorb eine Ringdichtung umschließt und dass durch den Lamellenkorb eine Ringdichtung beaufschlagbar und dadurch an einem Kabel anlegbar ist, um das Kabel einzuklemmen.

In diesem Fall wirkt der Lamellenkorb nicht unmittelbar auf das Kabel, sondern auf die Ringdichtung und klemmt mit der Ringdichtung das Kabel ein.

Dabei kann die Ringdichtung gleichzeitig eine Dichtwirkung gegen Feuchtigkeit entfalten.

Insbesondere ist die Dichtwirkung der Ringdichtung dann optimal, wenn die Ringdichtung mit einer umlaufenden Dichtkante des Fixierungsgehäuses zusammenwirkt, so dass auch die Ringdichtung einen feuchtigkeitsdichten Abschluss zum Fixierungsgehäuse bewirken kann.

Die Hutmutter zum Beaufschlagen des Lamellenkorbs kann dabei in unterschiedlichster Weise am Fixierungsgehäuse festlegbar sein.

So wäre es beispielsweise denkbar, die Hutmutter durch eine Rastverbindung in Richtung der Mittelachse relativ zum Fixierungsgehäuse festzulegen.

Eine besonders günstige Lösung sieht jedoch vor, dass das Fixierungsgehäuse ein Außengewinde aufweist, in welches ein Innengewinde der Hutmutter eingreift, so dass die Hutmutter auf das Fixierungsgehäuse aufschraubbar und dadurch in axialer Richtung relativ zum Fixierungsgehäuse bewegbar ist.

Auch hinsichtlich der Ausbildung des Schirmkontaktelements wurden im Zusammenhang mit der bisherigen Erläuterung der einzelnen erfindungsgemäßen Lösungen keine näheren Angaben gemacht.

So sieht eine vorteilhafte Lösung vor, dass das Schirmkontaktelement einen Außenkörper aufweist, von welchem ausgehend sich einzelne Kontaktelemente in Richtung der Mittelachse erstrecken.

Vorzugsweise sind dabei die einzelnen Kontaktelemente in dem Außenkörper dadurch fixiert, dass sie einen im Außenkörper sitzenden Haltering umgreifen.

Beispielsweise weisen dabei die einzelnen Kontaktelemente Kontaktfinger auf, die sich in Richtung der Mittelachse erstrecken.

Vorzugsweise weisen die Kontaktfinger eine derartige Länge auf, dass sie sich bis zu einem von diesen umschlossenen Durchlass erstrecken.

Mit derartigen Kontaktelementen, insbesondere den Kontaktfingern derselben lässt sich dabei in einfacher Weise der elektrische Kontakt zum Kabelschirm herstellen, nämlich dadurch, dass der Kabelschirm durch eine Vielzahl von Kontaktfingern kontaktiert wird, wobei die Kontaktfinger selbst wieder über den Außenkörper elektrisch leitend mit der Montageeinheit verbunden sind.

Alternativ dazu ist vorgesehen, dass das Schirmkontaktelement Kontaktbügel aufweist, welche sich in Richtung der Mittelachse erstrecken.

Vorzugsweise sind die Kontaktbügel an einem Außenkörper gehalten, welcher mit radialer Spannung in die Schirmkontaktelementaufnahme eingesetzt ist.

Eine besonders günstige Lösung sieht dabei vor, dass die Kontaktbügel einstückig an den Außenkörper angeformt sind und sich radial federnd ausgehend vom Außenkörper nach innen in Richtung der Mittelachse erstrecken.

Ferner ist vorzugsweise vorgesehen, dass die Kontaktbügel zur Kontaktierung des Kabelschirms eine Bügelkufe aufweisen, welche verhindert, dass sich die Kontaktbügel am freiliegenden Kabelschirmabschnitt verfangen.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Perspektivische Darstellung eines ersten Ausführungsbeispiels einer erfindungsgemäßen Kabeldurchführung;
- Fig. 2: eine perspektivische Darstellung des ersten Ausführungsbeispiels der erfindungsgemäßen Kabeldurchführung mit Darstellung der Kabelfixiereinheit und der Montageeinheit im voneinander getrennten Zustand;
- Fig. 3: eine teilweise aufgeschnittene Darstellung des ersten Ausführungsbeispiels der erfindungsgemäßen Kabeldurchführung bei welcher die Kabelfixiereinheit und die Montageeinheit bereits miteinander verbunden sind;
- Fig. 4: eine vergrößerte teilweise aufgeschnittene Darstellung der Montageeinheit des ersten Ausführungsbeispiels;
- Fig. 5: eine perspektivische teilweise aufgeschnittene Darstellung vor einer Ausrichtung des ersten Ausführungsbeispiels der erfindungsgemäßen Kabeldurchführung vor Montage desselben in einem Wandabschnitt;
- Fig. 6: eine perspektivische Darstellung eines zweiten Ausführungsbeispiels einer erfindungsgemäßen Kabeldurchführung;
- Fig. 7: eine teilweise aufgeschnittene Darstellung eines dritten Ausführungsbeispiels einer erfindungsgemäßen Kabeldurchführung vor einer Montage in einem Wandabschnitt;
- Fig. 8: eine teilweise aufgeschnittene, in einem Wandabschnitt montierte Darstellung eines vierten Ausführungsbeispiels einer erfindungsgemäßen Kabeldurchführung;
- Fig. 9: eine teilweise aufgeschnittene, in einem Wandabschnitt montierte Darstellung eines fünften Ausführungsbeispiels der erfindungsgemäßen Kabeldurchführung;

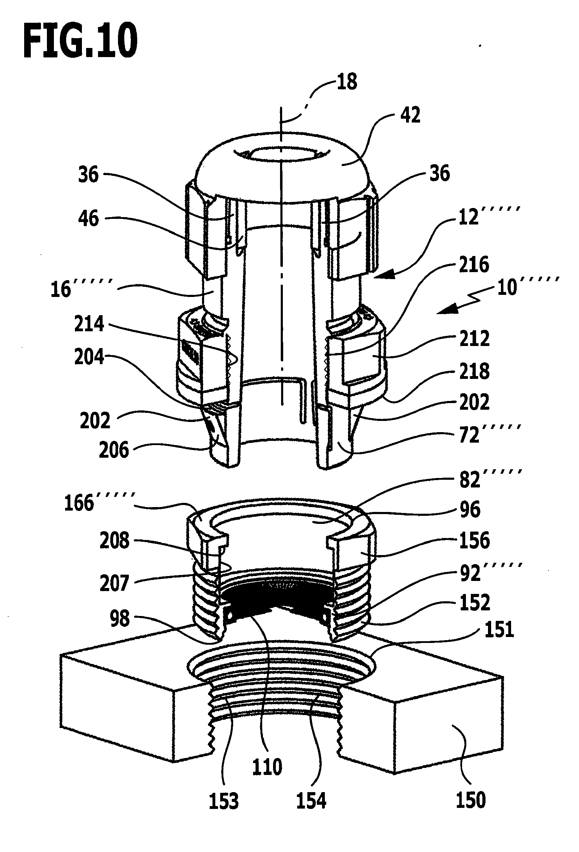

- Fig. 10: eine teilweise aufgeschnittene Darstellung eines sechsten Ausführungsbeispiels einer erfindungsgemäßen Kabeldurchführung mit von der Montageeinheit getrennter Kabelfixiereinheit vor einer Montage derselben in einem Wandabschnitt;
- Fig. 11: eine Darstellung des sechsten Ausführungsbeispiels gemäß Fig. 10, wobei die Kabelfixiereinheit und die Montageeinheit miteinander verbunden sind und vor einer Montage in dem Wandabschnitt stehen und

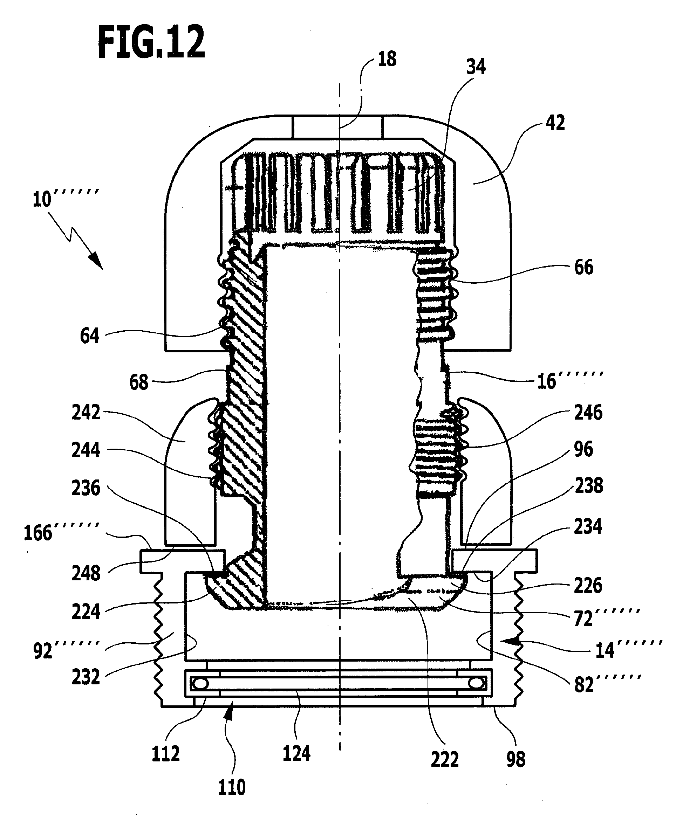

- Fig. 12: eine teilweise aufgeschnittene Darstellung eines siebten Ausführungsbeispiels einer erfindungsgemäßen Kabeldurchführung.

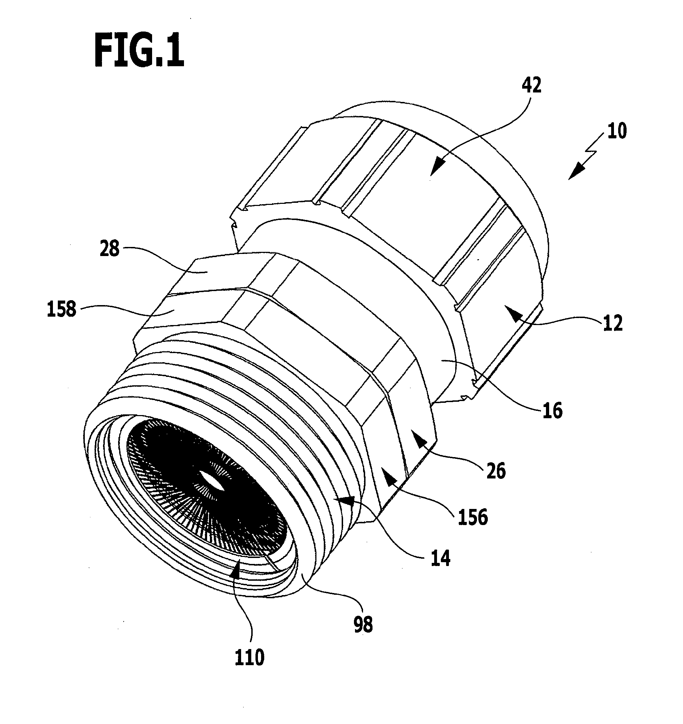

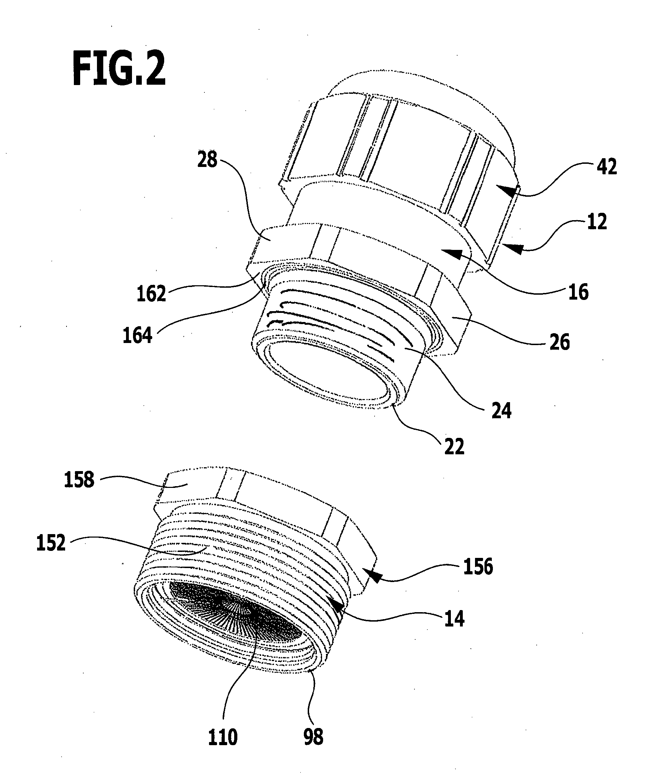

Ein in Fig. 1 und 2 dargestelltes erstes Ausführungsbeispiel einer erfindungsgemäßen Kabeldurchführung 10 umfasst eine als Ganzes mit 12 bezeichnete Kabelfixiereinheit, sowie eine als Ganzes mit 14 bezeichnete Montageeinheit, die formschlüssig, wie nachfolgend noch im Einzelnen beschrieben, miteinander verbindbar sind.

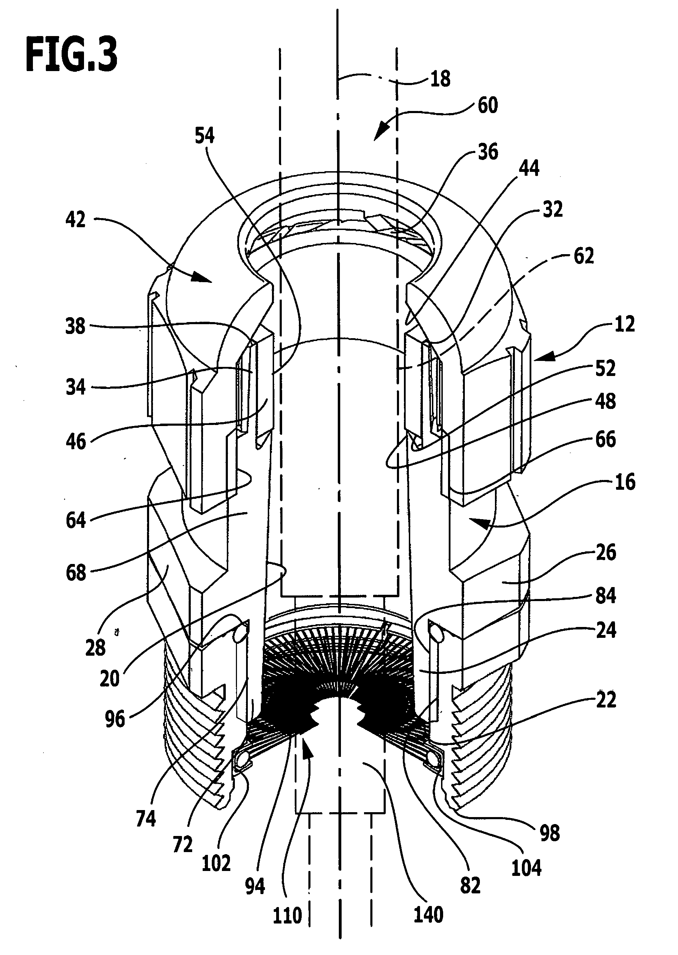

Dabei umfasst die Kabelfixiereinheit 12, wie in Fig. 2 und 3 dargestellt, ein Fixierungsgehäuse 16, welches beispielsweise in Form eines Gehäusestutzens ausgebildet ist und im Bereich eines ersten Endes 22 mit einem Halteabschnitt 24 versehen ist, der beispielsweise sich unmittelbar an das erste Ende 22 anschließt.

Das Fixierungsgehäuse 16 erstreckt sich dabei rohrähnlich und koaxial zu einer Mittelachse 18 und weist ebenfalls einen koaxial zur Mittelachse 18 verlaufenden zentralen Durchlasskanal 20 auf, durch welchen ein Kabel durch die Kabelfixiereinheit 12 und insbesondere das Fixierungsgehäuse 16 derselben hindurchführbar ist.

Auf einer dem ersten Ende 22 abgewandten Seite des Halteabschnitts 24 ist ferner noch ein Werkzeugangriffsbund 26 vorgesehen, welcher Werkzeugangriffsflächen 88, beispielsweise in Form von Schlüsselflächen, umfasst.

Über den Werkzeugangriffsbund 26 lässt sich das gesamte Fixierungsgehäuse 16 mittels eines Werkzeugs drehen.

Ferner umfasst die Kabelfixiereinheit 12, wie in Fig. 3 dargestellt, an einem dem ersten Ende 22 gegenüberliegenden zweiten Ende 32 des Fixierungsgehäuses 16 einen Lamellenkorb 34, welcher um eine Mittelachse 18 des Fixierungsgehäuses herum angeordnete einzelne Lamellen 36 umfasst, die im Bereich ihrer Lamellenenden 38 durch eine als Ganzes mit 42 bezeichnete Hutmutter beaufschlagbar sind, wobei die Hutmutter 42 eine Druckfläche 44 aufweist, die konisch zur Mittelachse 18 verläuft und mit welcher die Lamellenenden 38 derart beaufschlagbar sind, dass diese in radialer Richtung zur Mittelachse 18 auf diese zu bewegbar sind.

Die Lamellen 36 des Lamellenkorbs 34 umschließen dabei eine Ringdichtung 46, welche sich ausgehend von den Lamellenenden 38 in Richtung des ersten Endes 22 des Fixierungsgehäuses 16 bis zu einer Dichtkante 48 erstreckt, die ringförmig um die Mittelachse 18 umlaufend an dem Fixierungsgehäuse 16 vorgesehen ist, und an welcher die Ringdichtung 46 mit einer Stirnfläche 52 anliegt, so dass sich die Dichtkante 48 in die Stirnfläche 52 eingräbt und somit dicht mit dieser abschließbar ist.

Somit ist die Ringdichtung 46 durch die einzelnen Lamellen 36 des Lamellenkorbs 34 in Richtung der Mittelachse 18 beaufschlagbar, so dass die Ringdichtung 46 mit einer Innenfläche 54 an ein Kabel 60, insbesondere eine Außenmantelfläche 62 des Kabels 60, anlegbar ist, um mit der Außenmantelfläche 62 einen dichten Abschluss herzustellen, wenn das Kabel 60 in den zentralen Durchlasskanal 20 des Fixierungsgehäuses 16 eingreift.

Bei dem erfindungsgemäßen Ausführungsbeispiel können im Falle einer Ausführung des Fixierungsgehäuses 16 aus Kunststoff der Lamellenkorb 34 mit den Lamellen 36 einstückig an das Fixierungsgehäuse 16 angeformt sein.

Bei Ausbildung des Fixierungsgehäuses 16 aus einem nichtelastischen Material kann der Lamellenkorb 34 mit den Lamellen 36 als Einsatzteil in das Fixierungsgehäuse 16 eingesetzt und an diesem fixiert werden.

Die Hutmutter 42 weist zur Fixierung derselben an dem Fixierungsgehäuse 16 ein Innengewinde 64 auf, welches in ein Außengewinde 66 des Fixierungsgehäuses 16 eingreift, wobei das Außengewinde 66 am Fixierungsgehäuse 16 zwischen dem Werkzeugangriffsbund 26 und dem Lamellenkorb 34 angeordnet ist und umfangsseitig auf einem sich zwischen dem Werkzeugangriffsbund 26 und dem Lamellenkorb 34 erstreckenden Rohrabschnitt 68 des Fixierungsgehäuses 16 angeordnet ist.

Durch Aufschrauben der Hutmutter 42 auf das Fixierungsgehäuse 16 mit dem in das Außengewinde 66 des Fixierungsgehäuses 16 eingreifenden Innengewinde 64 lässt sich die Druckfläche 44 der Hutmutter 42 axial und parallel zur Mittelachse 18 bewegen und somit lassen sich die Lamellen 36 an ihren Lamellenenden 38 durch die Druckfläche 44 beaufschlagen, um die Ringdichtung 46 in Richtung der Mittelachse 18 zu bewegen und an die Außenmantelfläche 62 des Kabels 60 anlegen zu können.

Der Lamellenkorb 34, die Ringdichtung 46 und die Hutmutter 42 bilden zusammen mit dem diese tragenden dem Halteabschnitt gegenüberliegenden Teilbereich des Fixierungsgehäuses 16 eine Kabelfixierung 50.

Die Kabelfixiereinheit 12 weist bei dem ersten Ausführungsbeispiel als Halteabschnitt 24 einen sich ausgehend von dem Werkzeugangriffsbund 26 erstreckenden und rohrförmig ausgebildeten Ansatz 72 auf, welcher mit einem Außengewinde 74 versehen ist.

Beispielsweise kann die beschriebene Kabelfixiereinheit 12 als Kabelverschraubung ausgebildet sein, welche als Standardprodukt am Markt zur Verfügung steht, wobei bei der üblichen Kabelverschraubung der mit dem Außengewinde 74 versehene Ansatz 72 des Fixierungsgehäuses 16 in eine Gewindebohrung einer Wand, insbesondere einer Wand eines Gehäuses, einschraubbar ist, um die Kabelverschraubung an dem Gehäuse zu fixieren. Dabei dient die Kabelverschraubung in diesem Fall dazu, das Kabel 60 mechanisch relativ zu dem Gehäuse zu fixieren und dabei außerdem eine möglichst gute Abdichtung zwischen dem Kabel und dem Gehäuse zu erhalten.

Bei der erfindungsgemäßen Lösung gemäß dem ersten Ausführungsbeispiel greift nun der Ansatz 72 mit dem Außengewinde 74 nicht in ein Innengewinde einer Wand eines Gehäuses ein, sondern in eine Aufnahme 82 der Montageeinheit 14, die mit einem Innengewinde 84 versehen ist, so dass sich das Außengewinde 74 in das Innengewinde 84 einschrauben und somit die gesamte Kabelfixiereinheit 12 relativ zur Montageeinheit 14 formschlüssig fixieren lässt.

Vorzugsweise wird die Aufnahme der Montageeinheit 14 gebildet durch einen Hülsenkörper 92, welcher sich um einen zentralen Durchbruch 94 herum erstreckt und zwar von einem ersten, der Kabelfixiereinheit 12 zugewandten Ende 96 bis zu einem zweiten, der Kabelfixiereinheit 12 abgewandten Ende 98 erstreckt.

Dabei erstreckt sich die Aufnahme 82 in dem Hülsenkörper 92 von dem ersten Ende 96 ausgehend in Richtung der Mittelachse 18 über mindestens ein Drittel des zentralen Durchbruchs 94 des Hülsenkörpers 92.

Ferner ist der Hülsenkörper 92 ausgehend vom zweiten Ende 98 mit einer Schirmkontaktelementaufnahme 102 versehen, die beispielsweise als sich ausgehend vom zweiten Ende 98 in Richtung des ersten Endes 96 erstreckende stufenförmige Ausnehmung 104 ausgebildet ist, wobei in diese Aufnahme 102 ein als Ganzes mit 110 bezeichnetes Schirmkontaktelement einsetzbar ist.

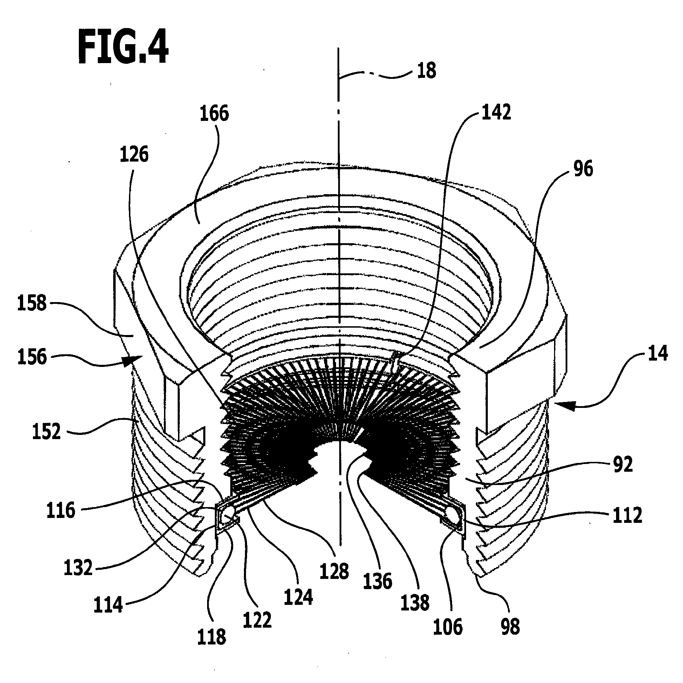

Das Schirmkontaktelement 110 umfasst seinerseits, wie vergrößert in Fig. 4 dargestellt, einen Außenkörper 112, der im Querschnitt V-förmig ausgebildet ist, wobei der Außenkörper 112, der einen Mittelschenkel 114 sowie zwei Seitenschenkel 116 und 118 aufweist, wobei der Mittelschenkel 114 ungefähr parallel zur Mittelachse 18 ausgerichtet ist, während sich die Seitenschenkel 116 und 118 quer zur Mittelachse 118 erstrecken.

Der Außenkörper 112 umgreift einen Haltering 122, der zwischen den Seitenschenkeln 116 und 118 angeordnet ist und der auf seinen den Seitenschenkeln 116 und 118 sowie dem Mittelschenkel 114 zugewandten Seiten von einzelnen Kontaktelementen 124 umschlossen ist, die Kontaktfinger 126 und 128 umfassen, wobei die Kontaktfinger 126 und 128 durch ein den Haltering 122 auf seinen den Seitenschenkeln 116 und 118 sowie dem Mittelschenkel 114 zugewandten Seiten umschlingenden Verbindungsbügel 132 miteinander verbunden sind.

Im einfachsten Fall sind der Verbindungsbügel 132 und die Kontaktfinger 126 und 128 einstückig miteinander verbunden und werden beispielsweise aus einem Drahtstück oder einem Flachmaterialstück gebogen.

Die Kontaktfinger 126 und 128 erstrecken sich vorzugsweise jeweils bis zu zentralen, die Mittelachse 18 umschließenden Durchlässen 136 und 138, wobei die Durchmesser der Durchlässe 136 und 138 so gewählt sind, dass ein freiliegender Kabelschirmabschnitt 140 des Kabels 60, der dadurch entsteht, dass von dem Kabel 60 der Außenmantel 62 bis zum Kabelschirmabschnitt 140 entfernt wird, nicht ohne Deformation der Kontaktfinger 126, 128 durch das Schirmkontaktelement 110 durchstreckbar gesteckt werden kann.

Eine Fixierung des Schirmkontaktelements 110 in der Aufnahme 102 erfolgt vorzugsweise dadurch, dass das Schirmkontaktelement 110 im Bereich seines Außenkörpers 112 und des Halterings 122 nicht geschlossen um die Mittelachse 18 umläuft, sondern eine Unterbrechung 142 aufweist und somit radial zur Mittelachse 18 federnd ausgebildet ist, so dass das Schirmkontaktelement 110 radial komprimierbar ist, und dadurch ausgehend vom zweiten Ende 98 in die Aufnahme 102 einschiebbar ist, so lange bis es in der radial aufgeweiteten Nut 106 der Ausnehmung 104 verrastend fixierbar ist.

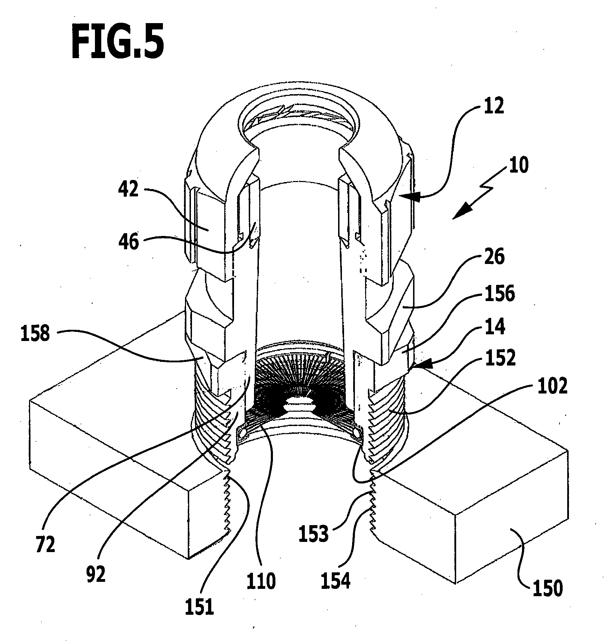

Wie in Fig. 4 und 5 dargestellt, weist der Hülsenkörper 92 ausgehend vom zweiten Ende 98 noch ein Außengewinde 152 auf, mit welchem der Hülsenkörper 92 der Montageeinheit 14 in eine Öffnung 151 eines Wandabschnitts 150, deren Innenwand 153 ein Innengewinde 154 aufweist, einschraubbar ist, an welcher die erfindungsgemäße Kabeldurchführung 10 montiert werden soll.

Der Wandabschnitt 150 ist üblicherweise Teil einer Gehäusewand eines elektrischen Geräts oder einer elektrischen Schalteinheit oder einer ähnlichen elektrischen Einheit, die elektrisch leitend ist, so dass durch das Einschrauben des Außengewindes 152 der Montageeinheit 14 in das Innengewinde 154 des Wandabschnitts 150 eine elektrische Verbindung zwischen dem Wandabschnitt 150 und der Montageeinheit 14 herstellbar ist.

Ist der Hülsenkörper 92 aus einem elektrisch leitfähigem Material, beispielsweise Metall hergestellt, so kann der Hülsenkörper 92 durch das Einschrauben desselben mit dem Außengewinde 152 in das Innengewinde 154 des Wandabschnitts 150 in einfacher Weise eine elektrisch leitende Verbindung zwischen dem Wandabschnitt 150 und dem Schirmkontaktelement 110 herstellen, das seinerseits selbst in der Aufnahme 102 des Hülsenkörpers 92 sitzt und somit in einfacher Weise ebenfalls elektrisch leitend mit dem Hülsenkörper 92 verbunden ist.

Insgesamt ist somit in einfacher Art und Weise eine elektrisch leitende Verbindung zwischen dem Wandabschnitt 150 mit dem Innengewinde 154 sowie dem Hülsenkörper 92 mit dem Außenkörper 152 und dem Schirmkontaktelement 110 in der Aufnahme 102 des Hülsenkörpers 92 hergestellt, so dass bei Kontaktierung des Kabelschirms 140 des Kabels 60 mittels des Schirmkontaktelements 110, insbesondere mit den Kontaktfingern 126 und 128 desselben, eine elektrisch leitende Verbindung zwischen dem Kabelschirm 140 und dem Wandabschnitt 150 besteht.

Diese elektrisch gut leitende Verbindung zwischen dem Wandabschnitt 150 und dem Kabelschirm 140 ist lediglich durch die Montageeinheit 14 herstellbar, so dass die Kabelfixiereinheit 12 für die Frage der elektrisch gut leitenden Verbindung zwischen dem Kabelschirm 140 und dem Wandabschnitt 150 im Hinblick auf ihre eigene elektrische Leitfähigkeit völlig irrelevant ist.

Aus diesem Grund lässt sich beispielsweise eine Kabelfixiereinheit 12 einsetzen, die vollständig aus Kunststoff hergestellt ist und somit erheblich kostengünstiger ist als eine entsprechende Kabelfixiereinheit aus Metall wäre.

Dennoch besteht auch die Möglichkeit, eine Kabelfixiereinheit 12 aus Metall einzusetzen, sofern dies aus Stabilitätsgründen oder anderen Gründen wünschenswert ist.

Auch in diesem Fall ist die Kabelfixiereinheit 12 aus Metall elektrisch leitend mit der Montageeinheit 14 dadurch verbunden, dass das Außengewinde 74 des Ansatzes 72 in das Innengewinde 84 der Aufnahme 82 eingeschraubt ist.

Um das Montageelement 14 unabhängig von der Kabelfixiereinheit 12 in den Wandabschnitt 150, insbesondere in das Innengewinde 154 desselben, einschrauben zu können, ist das Montageelement 14 im Bereich seines ersten Endes 96 noch mit einem sich an das erste Ende 96 anschließenden Werkzeugangriffsbund 156 versehen, der seinerseits ebenfalls Werkzeugangriffsflächen 158 umfasst, die beispielsweise als Schlüsselflächen ausgebildet sind. Um ferner eine gute Abdichtung zwischen der Kabelfixiereinheit 12 und der Montageeinheit 14 zu erreichen, weist die Kabelfixiereinheit 12 an ihrer dem Werkzeugangriffsbund 156 zugewandten Stirnseite 162 ein Dichtelement 164 auf, das gegen eine Stirnseite 166 des Werkzeugangriffsbunds 156 dicht abschließend anpressbar ist, so dass zwischen der Montageeinheit 14 und der Kabelfixiereinheit 12 jeweils im Bereich des Werkzeugangriffsbunds 26 bzw. 156 ein dicht, vorzugsweise feuchtigkeitsdicht, abschließender Übergang realisierbar ist.

Eine besonders bevorzugte Ausführungsform sieht vor, dass sich der Ansatz 72 mit dem Außengewinde 74 so weit in das Innengewinde 84 der Aufnahme 82 einschrauben lässt, dass letztlich die Werkzeugangriffsflächen 28 des Werkzeugangriffsbundes 26 mit den Werkzeugangriffsflächen 158 des Werkzeugangriffsbundes 156 der Montageeinheit 14 fluchten, wie in Fig. 1 dargestellt.

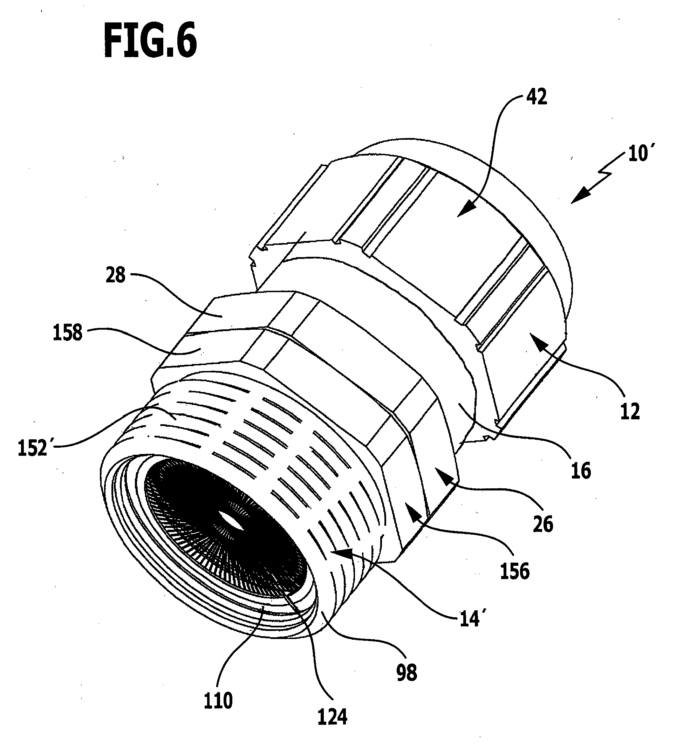

Bei einem zweiten Ausführungsbeispiel einer erfindungsgemäßen Kabeldurchführung 10', dargestellt in Fig. 6, sind diejenigen Teile, die mit denen des ersten Ausführungsbeispiels identisch sind, mit denselben Bezugszeichen versehen, so dass auch vollinhaltlich auf die Ausführungen zu dem ersten Ausführungsbeispiel Bezug genommen werden kann.

Im Gegensatz zum ersten Ausführungsbeispiel umfasst die Montageeinheit 14' kein übliches Außengewinde 152 an der Außenseite des Hülsenkörpers, sondern ein Außengewinde 152', welches als selbstschneidendes Gewinde ausgebildet ist, so dass dieses selbstschneidende Gewinde 152' in Bohrungen eines aus geeignetem Material ausgebildeten Wandbereichs 150 selbstschneidend eingeschraubt werden kann, oder in Bohrungen in einem Blechmaterial, wobei in diesem Fall das selbstschneidende Gewinde 152 ein selbstständig blechschneidendes Gewinde ist.

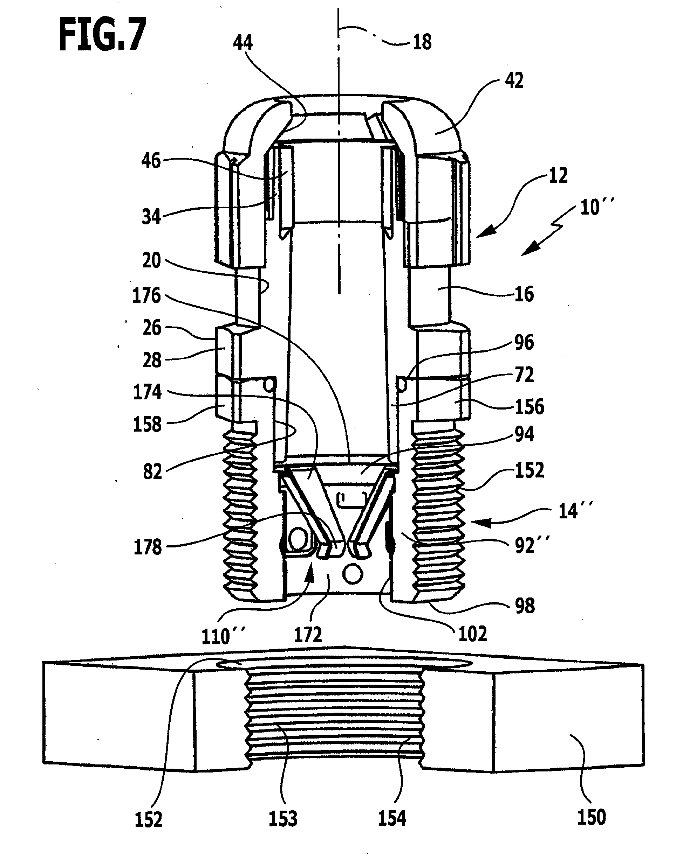

Bei einem dritten Ausführungsbeispiel einer erfindungsgemäßen Kabeldurchführung 10", dargestellt in Fig. 7, ist die Kabelfixiereinheit 12 in gleicher Weise ausgebildet wie bei den ersten beiden Ausführungsbeispielen, so dass vollinhaltlich auf die Ausführungen im Zusammenhang mit diesen Ausführungsbeispielen Bezug genommen werden kann.

Im Gegensatz zu den voranstehenden Ausführungsbeispielen ist allerdings die Montageeinheit 14" verändert ausgebildet.

Diese umfasst zwar den Hülsenkörper 92" mit dem Außengewinde 152, allerdings ist ausgehend von dem zweiten Ende 98 in den Hülsenkörper 92" ein Schirmkontaktelement 110" eingeschoben, welches im Gegensatz zum Schirmkontaktelement 110 einen flach in der Schirmkontaktelementaufnahme 102 anliegenden Außenkörper 172 umfasst, welcher sich ausgehend vom zweiten Ende 98 des Hülsenkörpers 92 in die Schirmkontaktelementaufnahme 102 hineinerstreckt und von dem Außenkörper 172 ausgehend nach innen umgebogene Kontaktbügel 174 aufweist, welche sich ausgehend von einem der Aufnahme 82 für den Ansatz 72 zugewandten inneren Ende 176 des Außenkörpers 172 in Richtung der Mittelachse 18 und außerdem in Richtung des zweiten Endes 98 des Hülsenkörpers 92 erstrecken und dabei ausgehend von Außenkörper 172 radial nach innen in Richtung der Mittelachse 18 überstehen.

Dabei weisen die Kontaktbügel 174 endseitig eine wieder radial nach außen umgebogene Bügelkufe 178 auf, die verhindert, dass die Kontaktbügel 174 sich in dem freiliegenden Kabelschirmabschnitt 140 verfangen.

Ein durch den zentralen Durchlasskanal 20 der Kabelfixiereinheit 12 und den zentralen Durchbruch 94 des Hülsenkörpers 92' hindurchgeschobenes Kabel 60 wird mit einem freiliegenden Kabelschirmabschnitt 140 dann die Kontaktbügel 174 kontaktieren, die andererseits dadurch, dass der Außenkörper 172 des Schirmkontaktelements 110" mit radial nach außen wirkender Spannung an dem Hülsenkörper 92 anliegt, auch in elektrisch leitender Verbindung mit dem Hülsenkörper 92 stehen, so dass insgesamt der Hülsenkörper 92 wiederum in der Lage ist, eine elektrisch gut leitende Verbindung zwischen dem Wandabschnitt 150 und dem Kontaktbügel 174, insbesondere mit dem von diesem kontaktierten Kabelschirmabschnitt 140 herzustellen.

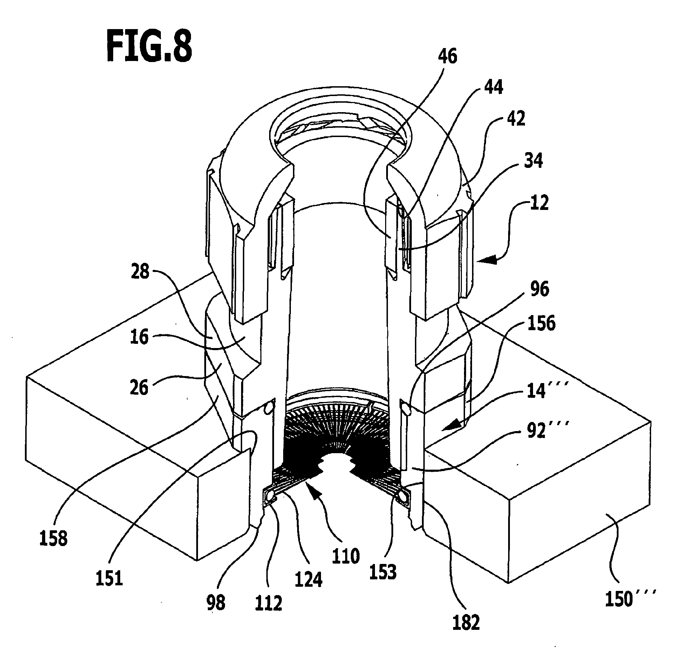

Bei einem vierten Ausführungsbeispiel, dargestellt in Fig. 8, ist wie bei den voranstehenden Ausführungsbeispielen die Kabelfixiereinheit 12 in gleicher Weise ausgebildet, wie im Zusammenhang mit den voranstehenden Ausführungsbeispielen erläutert.

Im Gegensatz zu den voranstehenden Ausführungsbeispielen ist allerdings die Montageeinheit 14"' insoweit verändert ausgebildet, als der Hülsenkörper 92"' auf seiner Außenseite nicht mehr das Außengewinde 152 trägt, welches in das Innengewinde 154 des Wandabschnitts 150"' eingreift, sondern eine glatte Außenseite 182 aufweist, welche mit Pressung in der Innenwand 153 der Öffnung 151 des Wandabschnitts 150"' sitzt, so dass die Montageeinheit 114"' lediglich durch Pressung und somit kraftschlüssig in dem Wandabschnitt 150"' verankert ist.

Hinsichtlich aller übrigen Merkmale, sowohl der Kabelfixiereinheit 12 als auch der Montageeinheit 14 wird vollinhaltlich auf die voranstehenden Ausführungsbeispiele Bezug genommen.

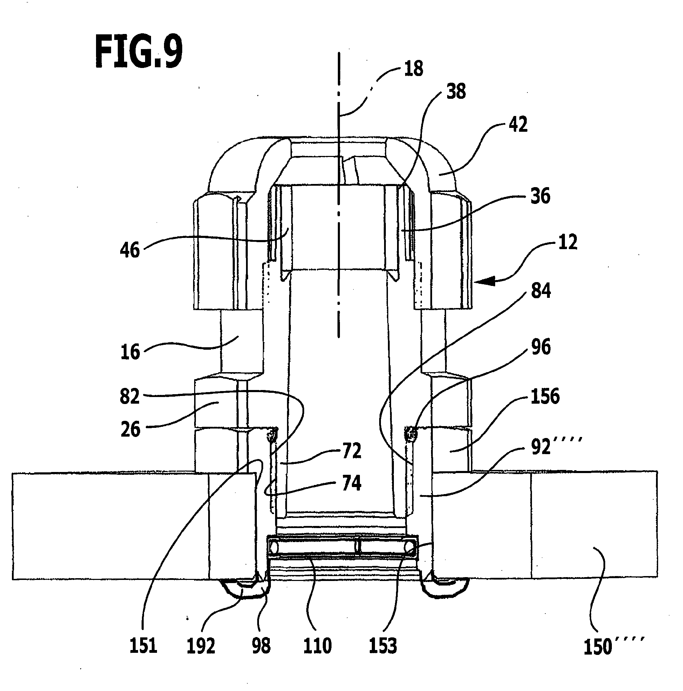

Bei einem fünften Ausführungsbeispiel, dargestellt in Fig. 9 ist ebenfalls die Kabelfixiereinheit 12 in gleicher Weise ausgebildet wie bei allen voranstehenden Ausführungsbeispielen beschrieben.

Ferner ist der Wandabschnitt 150"" ebenfalls mit einer glatten Innenwand 153 versehen, in welcher der Hülsenkörper 92"" sitzt.

Allerdings ist der Hülsenkörper 92"" im Bereich seines zweiten Endes 98 mit einer Umbördelung 192 versehen, durch welche der Hülsenkörper an dem Wandabschnitt 150"" verankert ist, wobei der Wandabschnitt 150"" dabei zwischen der Umbördelung 192 und dem Werkzeugangriffsbund 156 formschlüssig festgelegt ist.

Hinsichtlich aller übrigen Merkmale kann vollinhaltlich auf die Ausführungen zu den voranstehenden Ausführungsbeispielen Bezug genommen werden.

Bei einem sechsten Ausführungsbeispiel einer erfindungsgemäßen Kabeldurchführung 10""' ist das Fixierungsgehäuse 16 ""' insoweit verändert ausgebildet, als der Ansatz 72""' kein Außengewinde aufweist, sondern Rastelemente 202, welche radial zur Mittelachse relativ zum Ansatz 72""' bewegbar sind, so dass die Rastelemente 202 mit ihren Rastflächen 204 radial nach innen zur Mittelachse 18 hin bewegbar sind, jedoch selbstständig sich radial zur Mittelachse 18 nach außen in ihre Raststellung bewegen.

Ferner weisen die Rastelemente 202 noch Auflaufflächen 206 auf, welche sich ausgehend von einem Außendurchmesser des Ansatzes 72""' bis zu den Rastflächen 204 konisch bezüglich der Mittelachse 18 nach außen erstrecken.

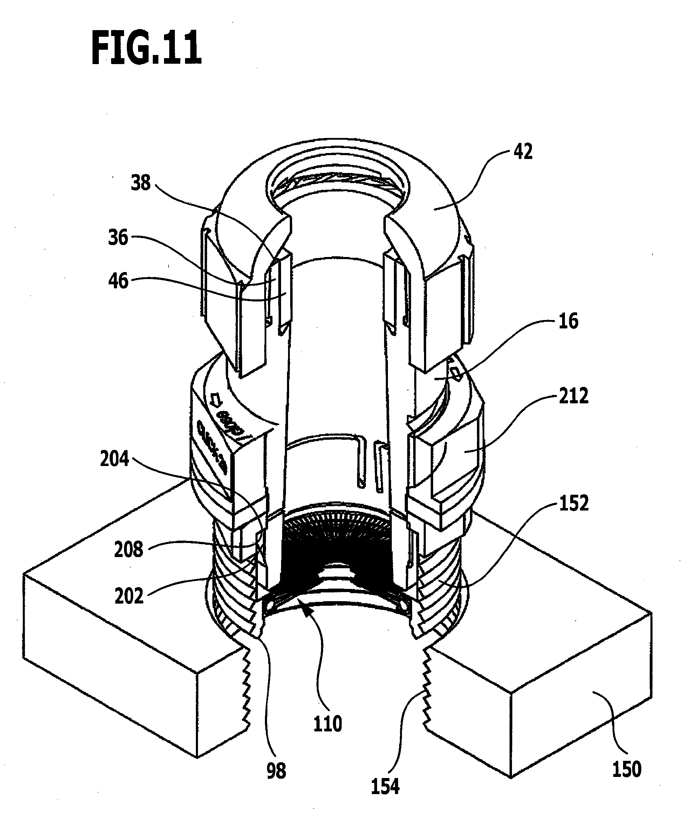

Der Ansatz 72""' mit den Rastelementen 202 ist in die Aufnahme 82""' des Hülsenkörpers 92""' eindrückbar, und zwar so weit, bis die Rastflächen 204 eine in der Aufnahme 82""' durch eine umlaufende Ausnehmung 207 vorgesehene Hinterschneidung 208 hintergreifen, wie dies in Fig. 11 dargestellt ist.

Damit ist der Ansatz 72""' in der Aufnahme 82""' gesichert gegen eine Bewegung aus der Aufnahme 82""' heraus in einer zur Mittelachse 18 parallelen Richtung.

Ferner ist am Fixierungsgehäuse 16 nicht der Werkzeugangriffsbund 26 vorgesehen, sondern ein Druckring 212, welcher mit einem Innengewinde 214 in ein Außengewinde 216 des Fixierungsgehäuses 16""' eingreift, so dass der Druckring 212 durch Drehung desselben in Richtung der Mittelachse 18 verstellbar ist, wobei ein Verdrehen des Druckrings 212 dergestalt möglich ist, dass der Druckring 212 mit seiner Druckseite 218 an der Stirnseite 166""' des Hülsenkörpers 92""' anliegt und somit in der Lage ist, den gesamten Fixierungskörper 16 dergestalt relativ zum Hülsenkörper 92""' zu verschieben, dass die Rastflächen 204 an den Hinterschneidungen 208 zur Anlage kommen, so dass durch Festdrehen des Druckrings 212 die Kabelfixierungseinheit 12 relativ zur Montageeinheit 14, insbesondere relativ zum Hülsenkörper 92""', festlegbar ist.

Im Übrigen sind diejenigen Elemente, die mit denen der voranstehenden Ausführungsbeispiele identisch sind, mit denselben Bezugszeichen versehen, so dass vollinhaltlich auf die Ausführungen zu diesen Elementen im Zusammenhang mit den voranstehenden Ausführungsbeispielen Bezug genommen werden kann.

Bei einem siebten Ausführungsbeispiel einer erfindungsgemäßen Kabeldurchführung 10""" ist das Fixierungsgehäuse 16""" insoweit verändert ausgebildet, als der Ansatz 72""" kein Außengewinde und keine Rastelemente aufweist, sondern als Haltekopf 222 ausgebildet ist, welcher beispielsweise auf gegenüberliegenden Seiten Haltenasen 224 und 226 trägt, die mitsamt dem Haltekopf 222 in der Aufnahme 82""" angeordnet sind, und dabei in eine radial umlaufend angeordnete Vertiefung 232 eingreifen, die auf einer dem ersten Ende 96 zugewandten Seite eine Flanschfläche 234 ausbildet, an welcher die Nasen 224 und 226 mit ihren Abstützflächen 236 und 238 anliegen, um das Fixierungsgehäuse 16""" relativ zur Montageeinheit 14""", insbesondere relativ zum Hülsenkörper 92""" abstützend fixieren.

Um die Stützflächen 236 und 238 in der Anlage an der Flanschfläche 234 zu halten, ist das Fixierungsgehäuse 16""" in gleicher Weise wie beim sechsten Ausführungsbeispiel mit einem Druckring 242 versehen, welcher mit einem Innengewinde 244 in ein Außengewinde 246 des Fixierungsgehäuses 16""" eingreift und durch Drehen relativ zum Fixierungsgehäuse 16""" in Richtung der Mittelachse 18 verstellbar ist, so dass der Druckring 242 mit einer Druckseite 248 an der Stirnseite 166""" des Hülsenkörpers 92""" anliegt und abgestützt ist, und somit in der Lage ist, das gesamte Fixierungsgehäuse 16 so zu beaufschlagen, dass die Nasen 224 und 226 mit den Stützflächen 236 und 238 an der Flanschfläche 234 kraftbeaufschlagt anliegen und somit insgesamt formschlüssig relativ zum Hülsenkörper 92""" fixiert ist.

Im Übrigen sind diejenigen Elemente, die mit denen der voranstehenden Ausführungsbeispiele identisch sind, mit denselben Bezugszeichen versehen, so dass vollinhaltlich auf die Ausführungen zu diesen Elementen im Zusammenhang mit den voranstehenden Ausführungsbeispielen Bezug genommen werden kann.

Insbesondere weist das Fixierungsgehäuse 16""" in gleicher Weise wie bei den vorher beschriebenen Ausführungsbeispielen eine Kabelfixierung 50 mit einem Lamellenkorb 34, einer im Lamellenkorb 34 sitzende Ringdichtung 46 und einer Hutmutter 42 auf, welche zur Fixierung des Kabels dienen, in gleicher Weise wie im Zusammenhang mit den voranstehenden Ausführungsbeispielen beschrieben.

Auch das Schirmkontaktelement 110 ist in gleicher Weise wie bei einem der voranstehenden Ausführungsbeispiele beschrieben ausgebildet, so dass auf dieses vollinhaltlich Bezug genommen werden kann.

## Patentansprüche

1. Kabeldurchführung umfassend eine Kabelfixiereinheit (12) mit einem Fixierungsgehäuse (16), das mit einer Kabelfixierung (50) und einem Halteabschnitt (24) versehen ist, sowie ein einen Kabelschirm (140) eines durch die Kabeldurchführung (10) hindurchgeführten Kabels (60) kontaktierendes Schirmkontaktelement (110),
**dadurch gekennzeichnet, dass** die Kabeldurchführung (10) eine mit einem Wandabschnitt (150) eines Geräts verbindbare Montageeinheit (14) aufweist, dass die Montageeinheit (14) formschlüssig mit der Kabelfixiereinheit (12) dadurch verbindbar oder verbunden ist dass die Kabelfixiereinheit (12) mit dem Halteabschnitt (24) des Fixierungsgehäuses (16) in eine Aufnahme (82) der Montageeinheit (14) eingreift und in dieser formschlüssig fixiert ist und dass die Montageeinheit (14) so ausgebildet ist, dass sie eine elektrisch leitende Verbindung zwischen dem Schirmkontaktelement (110) und dem Wandabschnitt (150) herstellt.

2. Kabeldurchführung nach Anspruch 1, **dadurch gekennzeichnet, dass** der Halteabschnitt (24) in der Aufnahme (82) durch ineinandergreifende Gewinde (74, 84) formschlüssig gehalten ist.

3. Kabeldurchführung nach Anspruch 1, **dadurch gekennzeichnet, dass** der Halteabschnitt (24) in der Aufnahme (82) durch einander hintergreifende Elemente (202, 208; 224, 234) formschlüssig gehalten ist.

4. Kabeldurchführung nach einem der voranstehenden Ansprüche, **dadurch gekennzeichnet, dass** das Schirmkontaktelement (110) an der Montageeinheit (14) gehalten ist.

5. Kabeldurchführung nach Anspruch 4, **dadurch gekennzeichnet, dass** das Schirmkontaktelement (110) an der Montageeinheit (14) an einem außerhalb der Aufnahme (82) für den Halteabschnitt (24) liegenden Bereich angeordnet ist.

6. Kabeldurchführung nach Anspruch 4 oder 5, **dadurch gekennzeichnet**, **dass** das Schirmkontaktelement (110) in eine Schirmkontaktelementaufnahme (102) der Montageeinheit (14) eingesetzt ist.

7. Kabeldurchführung nach Anspruch 6, **dadurch gekennzeichnet, dass** die Schirmkontaktelementaufnahme (102) an einem der Aufnahme (82) für das Halteelement (24) gegenüberliegenden Bereich der Montageeinheit (14) angeordnet ist.

8. Kabeldurchführung nach einem der voranstehenden Ansprüche, **dadurch gekennzeichnet, dass** die Montageeinheit (14) an einer Innenwand (153) einer Öffnung (151) des Wandabschnitts (150) festlegbar ist und dass insbesondere die Montageeinheit (14) formschlüssig an dem Wandabschnitt (150) festlegbar ist.

9. Kabeldurchführung nach einem der voranstehenden Ansprüche, **dadurch gekennzeichnet, dass** die Montageeinheit (14) im Bereich der Öffnung (151) mit dem Wandabschnitt (150) elektrisch leitend verbindbar ist.

10. Kabeldurchführung nach Anspruch 9, **dadurch gekennzeichnet, dass** die Montageeinheit (14) mit die elektrisch leitende Verbindung zum Wandabschnitt (150) herstellenden und in diesen eingreifenden Elementen (152) versehen ist.

11. Kabeldurchführung nach einem der voranstehenden Ansprüche, **dadurch gekennzeichnet, dass** die Kabelfixierung (50) an dem Fixierungsgehäuse (16) außerhalb des Halteabschnitts (24) angeordnet ist und dass insbesondere die Kabelfixierung (50) an dem Fixierungsgehäuse (16) auf einer dem Halteabschnitt (24) gegenüberliegenden Seite angeordnet ist.

12. Kabeldurchführung nach einem der voranstehenden Ansprüche, **dadurch gekennzeichnet, dass** die Kabelfixierung (509 eine Hutmutter (42) und einen Lamellenkorb (34) umfasst, wobei durch die Hutmutter (42) der Lamellenkorb (34) in Richtung eines durch die Kabeldurchführung hindurchlaufenden Kabels (60) beaufschlagbar ist und durch den Lamellenkorb (34) das Kabel (60) klemmbar ist und dass insbesondere der Lamellenkorb (34) eine Ringdichtung (46) umschließt und dass durch den Lamellenkorb (34) die Ringdichtung (46) beaufschlagbar und dadurch an einem Kabel (60) anlegbar ist.

13. Kabeldurchführung nach einem der voranstehenden Ansprüche, **dadurch gekennzeichnet, dass** das Schirmkontaktelement (110) einen Außenkörper (112) aufweist, von welchem ausgehend sich einzelne Kontaktelemente (124) in Richtung der Mittelachse (18) erstrecken.

14. Kabeldurchführung nach einem der voranstehenden Ansprüche, **dadurch gekennzeichnet, dass** das Schirmkontaktelement (110') Kontaktbügel (174) aufweist, welche sich in Richtung der Mittelachse (18) erstrecken.

## Claims

1. Cable feedthrough comprising a cable fixing unit (12) with a fixing housing (16) provided with a cable fixing member (50) and a holding section (24) as well as a shield contact element (110) making contact with a cable shield (140) of a cable (60) guided through the cable feedthrough (10),
**characterized in that** the cable feedthrough (10) has a mounting unit (14) connectable to a wall section (150) of an appliance, that the mounting unit (14) is connectable or connected to the cable fixing unit (12) in a form locking manner **in that** the cable fixing unit (12) engages with the holding section (24) of the fixing housing (16) in a receptacle (82) of the mounting unit (14) and is fixed in it in a form locking manner and that the mounting unit (14) is designed such that it provides an electrically conductive connection between the shield contact element (110) and the wall section (150).

2. Cable feedthrough as defined in claim 1, **characterized in that** the holding section (24) is held in the receptacle (82) in a form locking manner by way of threads (74, 84) engaging in one another.

3. Cable feedthrough as defined in claim 1, **characterized in that** the holding section (24) is held in the receptacle (82) in a form locking manner by way of elements (202, 208; 224, 234) engaging behind one another.

4. Cable feedthrough as defined in any one of the preceding claims, **characterized in that** the shield contact element (110) is held on the mounting unit (14).

5. Cable feedthrough as defined in claim 4, **characterized in that** the shield contact element (110) is arranged on the mounting unit (14) at an area located outside of the receptacle (82) for the holding section (24).

6. Cable feedthrough as defined in claim 4 or 5, **characterized in that** the shield contact element (110) is inserted into a shield contact element receptacle (102) of the mounting unit (14).

7. Cable feedthrough as defined in claim 6, **characterized in that** the shield contact element receptacle (102) is arranged at an area of the mounting unit (14) located opposite the receptacle (82) for the holding element (24).

8. Cable feedthrough as defined in any one of the preceding claims, **characterized in that** the mounting unit (14) is securable to an inner wall (153) of an opening (151) of the wall section (150) and that the mounting unit (14) is securable to the wall section (150), in particular, in a form locking manner.

9. Cable feedthrough as defined in any one of the preceding claims, **characterized in that** the mounting unit (14) is connectable to the wall section (150) in an electrically conductive manner in the region of the opening (151).

10. Cable feedthrough as defined in claim 9, **characterized in that** the mounting unit (14) is provided with elements (152) providing the electrically conductive connection to the wall section (150) and engaging in it.

11. Cable feedthrough as defined in any one of the preceding claims, **characterized in that** the cable fixing member (50) is arranged on the fixing housing (16) outside of the holding section (24) and that the cable fixing member (50) is arranged on the fixing housing (16), in particular, on a side located opposite the holding section (24).

12. Cable feedthrough as defined in any one of the preceding claims, **characterized in that** the cable fixing member (50) comprises a cap nut (42) and a fin basket (34), wherein the fin basket (34) is adapted to be acted upon by the cap nut (42) in the direction of a cable (60) running through the cable feedthrough and the cable (60) is adapted to be clamped by the fin basket (34) and that, in particular, the fin basket (34) surrounds an annular seal (46) and that the annular seal (46) is adapted to be acted upon by the fin basket (34) and abut on a cable (60) as a result.

13. Cable feedthrough as defined in any one of the preceding claims, **characterized in that** the shield contact element (110) has an outer body (112), individual contact elements (124) extending from said body in the direction of the central axis (18).

14. Cable feedthrough as defined in any one of the preceding claims, **characterized in that** the shield contact element (110') has contact brackets (174) extending in the direction of the central axis (18).

## Revendications

1. Passe-câble comprenant une unité de fixation de câble (12) avec un boîtier de fixation (16) muni d'un élément de fixation de câble (50) et d'une section de maintien (24), ainsi qu'un élément de contact de blindage (110) contactant un blindage (140) d'un câble (60) passé dans le passe-câble (10), **caractérisé en ce que** le passe-câble (10) comporte une unité de montage (14) pouvant être raccordée à une section de paroi (150) d'un appareil, **en ce que** l'unité de montage (14) peut être raccordée ou est raccordée par un dispositif de verrouillage à l'unité de fixation de câble (12), **en ce que** l'unité de fixation de câble (12) s'engage par la section de maintien (24) du boîtier de fixation (16) dans un logement (82) de l'unité de montage (14) et est fixée par un dispositif de verrouillage dans celle-ci, et **en ce que** l'unité de montage (14) est prévue de manière à réaliser une connexion électriquement conductrice entre l'élément de contact de blindage (110) et la section de paroi (150).

2. Passe-câble selon la revendication 1, **caractérisé en ce que** la section de maintien (24) est maintenue par un dispositif de verrouillage dans le logement (82) au moyen de filets (74, 84) qui s'engrènent l'un dans l'autre.

3. Passe-câble selon la revendication 1, **caractérisé en ce que** la section de maintien (24) est maintenue par un dispositif de verrouillage dans le logement (82) au moyen d'éléments en prise par l'arrière l'un avec l'autre (202, 208 ; 224, 234).

4. Passe-câble selon l'une des revendications précédentes, **caractérisé en ce que** l'élément de contact de blindage (110) est maintenu contre l'unité de montage (14).

5. Passe-câble selon la revendication 4, **caractérisé en ce que** l'élément de contact de blindage (110) est disposé contre l'unité de montage (14) sur une zone située à l'extérieur du logement (82) pour la section de maintien (24).

6. Passe-câble selon la revendication 4 ou 5, **caractérisé en ce que** l'élément de contact de blindage (110) est mis en place dans un logement (102) d'élément de contact de blindage de l'unité de montage (14).

7. Passe-câble selon la revendication 6, **caractérisé en ce que** le logement (102) d'élément de contact de blindage est disposé sur une zone de l'unité de montage (14) opposée au logement (82) pour l'élément de maintien (24).

8. Passe-câble selon l'une des revendications précédentes, **caractérisé en ce que** l'unité de montage (14) peut être fixée sur une paroi intérieure (153) d'une ouverture (151) de la section de paroi (150) et **en ce que** l'unité de montage (14) peut en particulier être fixée par un dispositif de verrouillage sur la section de paroi (150).

9. Passe-câble selon l'une des revendications précédentes, **caractérisé en ce que** l'unité de montage (14) peut être raccordée de manière électriquement conductrice à la section de paroi (150) au niveau de l'ouverture (151).

10. Passe-câble selon la revendication 9, **caractérisé en ce que** l'unité de montage (14) est pourvue d'éléments (152) réalisant la connexion électriquement conductrice à la section de paroi (150) et s'engageant dans celle-ci.

11. Passe-câble selon l'une des revendications précédentes, **caractérisé en ce que** l'élément de fixation de câble (50) est disposé sur le boîtier de fixation (16) à l'extérieur de la section de maintien (24) et **en ce que** l'élément de fixation de câble (50) est en particulier disposé contre le boîtier de fixation (16) sur une face opposée à la section de maintien (24).

12. Passe-câble selon l'une des revendications précédentes, **caractérisé en ce que** l'élément de fixation de câble (50) comprend un écrou-chapeau (42) et un panier à lamelles (34), le panier à lamelles (34) pouvant être sollicité par l'écrou-chapeau (42) dans la direction d'un câble (60) traversant le passe-câble et le câble (60) pouvant être serré par le panier à lamelles (34), **en ce que** le panier à lamelles (34) entoure en particulier un joint annulaire (46), et **en ce que** le joint annulaire (46) peut être sollicité par le panier à lamelles (34) et être ainsi appliqué contre un câble (60).

13. Passe-câble selon l'une des revendications précédentes, **caractérisé en ce que** l'élément de contact de blindage (110) présente un corps extérieur (112) à partir duquel s'étendent différents éléments de contact (124) dans la direction de l'axe central (18).

14. Passe-câble selon l'une des revendications précédentes, **caractérisé en ce que** l'élément de contact de blindage (110') présente des étriers de contact (174) qui s'étendent dans la direction de l'axe central (18).
